# EUROPEAN PATENT APPLICATION

(11) **EP 4 648 195 A1**
(43) Date of publication of application: **12.11.2025**
(21) Application number: 24835229.6
(22) Date of filing: 19.06.2024
(51) Int. Cl.: H01M 50/244, H01M 50/249, H01M 50/204, H01M 10/6556, H01M 10/625, H01M 10/6567, H01M 10/6568

(54) **BOX ASSEMBLY, BATTERY AND ELECTRICAL DEVICE**

(30) Priority: 04.07.2023 CN 202321738456 U
(71) Applicant: Contemporary Amperex Technology Co., Limited, Ningde, Fujian 352100 (CN)
(72) Inventor: YANG, Hui, Ningde, Fujian 352100 (CN); TANG, Yu, Ningde, Fujian 352100 (CN); XIA, Yangyong, Ningde, Fujian 352100 (CN)
(74) Representative: Kraus & Lederer PartGmbB
(86) International application number: PCT/CN2024/100092
(87) International publication number: WO 2025/007746

(57) **Abstract**

A box assembly (11), which relates to the technical field of batteries. The box assembly (11) is used to accommodate a battery cell (12), the box assembly (11) comprising a box body (111), a bottom protective plate (112) and a thermal management component (113), and the box body (111) comprising a bottom plate (1113) used to support the battery cell (12). The bottom protective plate (112) is connected to the bottom plate (1113). At least a portion of the thermal management component (113) is disposed between the bottom plate (1113) and the bottom protective plate (112), the thermal management component (113) being used to adjust the temperature of the battery cell (12) by means of the bottom plate (1113). In this design, the thermal management component (113) is located outside the box body (111); when liquid leakage or corrosion perforation occurs to the thermal management component (113), this reduces the risk of thermal runaway of the battery cell (12) caused by contact between leaked liquid and the battery cell (12) when the thermal management component (113) is located in the box body (111), which causes insulation failure of the battery cell (12). Accordingly, the reliability of the battery during use is increased.

## Description

### CROSS-REFERENCE TO RELATED APPLICATION

The present application claims priority to Chinese Patent Application No. 202321738456.9 filed on July 04, 2023 and entitled "CASE ASSEMBLY, BATTERY, AND ELECTRIC DEVICE", the content of which is incorporated herein by reference in its entirety.

### TECHNICAL FIELD

The present application relates to the technical field of batteries, and in particular, to a case assembly, a battery, and an electric device.

### BACKGROUND

Batteries are widely used in electronic devices, such as electric bicycles, electric vehicles, electric airplanes, electric ships, electric toy cars, electric toy ships, electric toy airplanes, and electric tools.

In the development of battery technologies, in addition to improving the performance of batteries, the reliability of batteries during use is also an essential consideration.

Therefore, how to improve the reliability of batteries is an urgent problem to be solved in battery technologies.

### SUMMARY

In view of the above problems, the present application provides a case assembly, a battery, and an electric device. The present application can improve the reliability of the battery.

In a first aspect, the present application provides a case assembly, which is used to accommodate a battery cell. The case assembly includes a case, a bottom protective plate, and a thermal management component, and the case includes a bottom plate for supporting the battery cell. The bottom protective plate is connected to the bottom plate. At least a part of the thermal management component is disposed between the bottom plate and the bottom protective plate, and the thermal management component is used to adjust the temperature of the battery cell through the bottom plate.

In the technical solutions of the embodiments of the present application, the case assembly includes the case, the bottom protective plate, and the thermal management component, and the case includes the bottom plate for supporting the battery cell. The bottom protective plate is connected to the bottom plate. At least a part of the thermal management component is disposed between the bottom plate and the bottom protective plate, and the thermal management component is used to adjust the temperature of the battery cell through the bottom plate. This design positions the thermal management component outside the case, which, in the case of liquid leakage or corrosion-induced perforation of the thermal management component, reduces the risk of thermal runaway of battery cells caused by insulation failure of the battery cells that is resulting from the contact of leaked liquid with the battery cells due to the placement of the thermal management component inside the case, thereby improving the reliability of the battery during use.

In some embodiments, the case assembly further includes a buffer layer, and at least a part of the buffer layer is disposed between the bottom protective plate and the thermal management component. When the case assembly is subjected to an external force, the buffer layer can buffer the thermal management component to a certain extent, thus reducing the risk of damage to the thermal management component.

In some embodiments, the thermal management component is connected to the bottom protective plate through the buffer layer. The thermal management component is integrated into the bottom protective plate through the buffer layer, and the mounting of the thermal management component can be completed after the bottom protective plate is connected to the case. Therefore, the thermal management component can be more conveniently and quickly assembled and disassembled.

In some embodiments, the thermal management component is embedded in the buffer layer. A mounting position for embedding the thermal management component is formed in advance in the buffer layer, and the assembly of the thermal management component can be completed simply by embedding the thermal management component in the mounting position, so that the thermal management component can be more conveniently positioned and fixed during assembly.

In some embodiments, a side of the thermal management component facing away from the bottom protective plate is not covered by the buffer layer and is thermally connected to the bottom plate of the case. Such a design improves the heat exchange effect between the thermal management component and the bottom plate of the case.

In some embodiments, a side of the bottom protective plate facing the case is provided with a recess, and at least a part of the buffer layer is accommodated in the recess. The recess can limit the boundary of the formed buffer layer when the buffer layer is formed on the bottom protective plate, which is beneficial to the automatic production of the case assembly.

In some embodiments, the buffer layer is injection molded on the bottom protective plate. The bottom protective plate is used as a part of the mold for injection molding the buffer layer, which reduces the production cost of the case assembly to a certain extent.

In some embodiments, the buffer layer is made of at least one of foamed plastic, aerogel, foam, and silica gel.

In some embodiments, in the thickness direction of the bottom protective plate, the projection of a liquid inlet end and the projection of a liquid outlet end of the thermal management component do not overlap with the projection of the bottom protective plate. Such a design allows the liquid inlet end and the liquid outlet end of the thermal management component to be more conveniently connected to the pipe.

In some embodiments, the thermal management component is a water-cooled tube or a water-cooled plate.

In some embodiments, the thermal management component is a water-cooled tube, and the water-cooled tube is a flat tube. The contact area between the flat tube and the bottom plate of the case is larger, such that the heat exchange effect of the thermal management component is improved.

In some embodiments, the bottom protective plate and the bottom plate are connected through bolts. The bottom protective plate can be removed by releasing the bolted fastening between the bottom protective plate and the bottom plate, so that the bottom protective plate is more convenient to assemble and disassemble, thus facilitating maintenance of the thermal management component.

In a second aspect, the present application provides a battery, which includes a battery cell and the case assembly according to the above embodiments, and the case assembly is used to accommodate the battery cell.

In a third aspect, the present application provides an electric device, which includes the battery according to the above embodiments, and the battery is used to provide electric energy.

The above description is only an overview of the technical solutions of the present application. To more clearly understand the technical means of the present application to enable implementation in accordance with the content of the specification and to make other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic view of a vehicle according to some embodiments of the present application;
FIG. 2 is an exploded view of a battery according to some embodiments of the present application;
FIG. 3 is a cross-sectional view of a case assembly according to some embodiments of the present application;
FIG. 4 is a cross-sectional view of part of the structure of a case assembly according to some embodiments of the present application;
FIG. 5 is a partially enlarged view of the portion A in FIG. 4 according to the present application;
FIG. 6 is a structural schematic view of a bottom protective plate according to some embodiments of the present application; and
FIG. 7 is a structural schematic view of a thermal management component according to some embodiments of the present application.

Reference numerals in the detailed description are as follows:
1000-vehicle; 300-motor; 200-controller; 100-battery; 11-case assembly; 12-battery cell; 111-case; 1111-first part; 1112-second part; 1113-bottom plate; 112-bottom protective plate; 1121-recess; 113-thermal management component; 1131-liquid inlet end of the thermal management component; 1132-liquid outlet end of the thermal management component; 114-buffer layer.

### DETAILED DESCRIPTION

Embodiments of the technical solutions of the present application will be described in detail below with reference to the drawings. The following embodiments are only for illustrating the technical solutions of the present application more clearly and therefore are only exemplary and do not limit the claimed scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms "first", "second", and the like are only used to distinguish different objects and should not be interpreted as indicating or implying the relative importance or implicitly indicating the number, specific order, or primary and secondary relationship of the noted technical features. In the description of the embodiments of the present application, "plurality of" means no less than two, unless otherwise explicitly and specifically defined.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "plurality of" refers to no less than two (including two). Similarly, "plurality of groups" refers to no less than two (including two) groups, and "plurality of pieces" refers to no less than two (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings and are merely for the convenience of describing the embodiments of the present application and simplifying the description, rather than indicating or implying that the noted apparatuses or elements must have specific directions or must be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to specific conditions.

The battery mentioned in the embodiments of the present application refers to a single physical module including one or a plurality of battery cells to provide higher voltage and capacity. The battery generally includes a case used to encapsulate one or a plurality of battery cells. The case can reduce the risk of liquid or other foreign matters affecting the charging or discharging of the battery cell.

In order to improve the working reliability and stability of the battery, a thermal management component is usually disposed in the case. In some cases, the thermal management component is located at the bottom of the case and is fixedly mounted on a side wall of the case. In some other cases, the thermal management component is located between adjacent battery cells and in close contact with the large surfaces of the battery cells. The battery cell is generally connected to the thermal management component through a thermally conductive adhesive, so that heat exchange can be performed between the battery cell and the thermal management component. When the temperature of the thermal management component changes, the temperature of the battery cell in contact with the thermal management component changes accordingly.

In general, the thermal management component is provided with a fluid that can adjust the temperature of a plurality of battery cells. The fluid herein may be a liquid or a gas, and adjusting the temperature refers to heating or heat dissipation of a plurality of battery cells. When heat dissipation or cooling is performed on the battery cells, the thermal management component may be referred to as a cooling component, a cooling system, a cooling plate, or the like. The fluid contained in the thermal management component may also be referred to as a cooling medium or a cooling fluid, and more specifically, may be referred to as a cooling liquid or a cooling gas. In addition, the thermal management component may also be used to heat to raise the temperature of a plurality of battery cells. The fluid may also be referred to as a heat exchange medium. Optionally, the fluid may flow circularly to achieve a better thermoregulation effect. Optionally, the fluid may be water, a mixed solution of water and ethylene glycol, air, or the like.

Battery technology advancement requires consideration of various design factors at the same time, such as energy density, cycle life, discharge capacity, charging and discharging rate, and other performance parameters. In addition, the reliability of the battery also needs to be considered.

The case is generally provided with an electrical cavity for accommodating the battery cells. In order to enable the battery to output a relatively stable voltage or current, it is often necessary to dispose a plurality of battery cells in the electrical cavity and electrically connect the plurality of battery cells through a busbar component. However, one of the surfaces of the thermal management component is located inside the electrical cavity. During use of the battery, the thermal management component is prone to deformation and leakage due to an external force. The leaked heat exchange medium, usually a conductor, will cause a short-circuit when it electrically connects two busbar components. Thus, the insulation of the battery cells fails, which leads to thermal runaway of the battery cells and relatively poor reliability of the battery during use.

In view of this, the present application provides a case assembly, which is used to accommodate a battery cell. The case assembly includes a case, a bottom protective plate, and a thermal management component, and the case includes a bottom plate for supporting the battery cell. The bottom protective plate is connected to the bottom plate. At least a part of the thermal management component is disposed between the bottom plate and the bottom protective plate, and the thermal management component is used to adjust the temperature of the battery cell through the bottom plate. This design positions the thermal management component outside the case, which, in the case of liquid leakage or corrosion-induced perforation of the thermal management component, reduces the risk of thermal runaway of battery cells caused by insulation failure of the battery cells that is resulting from the contact of leaked liquid with the battery cells due to the placement of the thermal management component inside the case, thereby improving the reliability of the battery during use.

The technical solutions described in the embodiments of the present application are applicable to various apparatuses that use batteries, such as electric bicycles, electric vehicles, ships, and spacecraft. For example, the spacecraft includes an airplane, a rocket, a space shuttle, a spaceship, and the like.

It is to be understood that the technical solutions described in the embodiments of the present application are not limited to the devices described above, but are applicable to all devices that use batteries. However, for the sake of brevity, the following embodiments are illustrated using electric vehicles as examples.

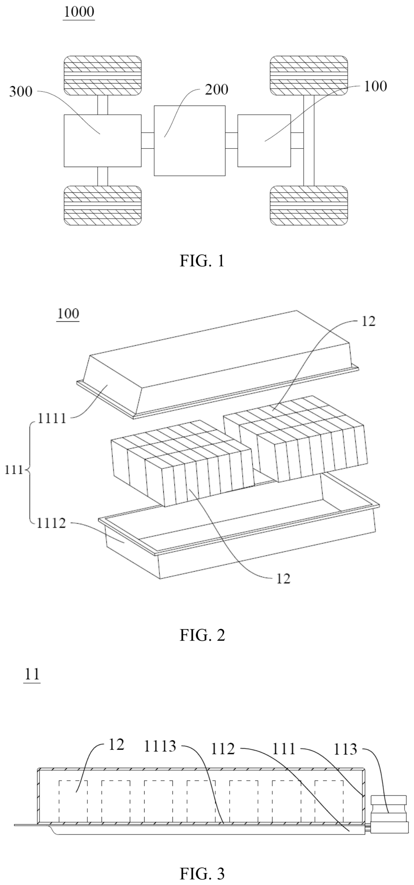

In some embodiments, referring to FIG. 1, a vehicle 1000 may be a fuel vehicle, a gas vehicle, or a new energy vehicle. The new energy vehicle may be a pure electric vehicle, a hybrid vehicle, an extended-range vehicle, or the like. A motor 300, a controller 200, and a battery 100 may be disposed inside the vehicle 1000. The controller 200 is used to control the battery 100 to power the motor 300. For example, the battery 100 may be disposed at the bottom, front, or rear of the vehicle 1000. The battery 100 may be used to power the vehicle 1000. For example, the battery 100 may serve as an operation power source for the vehicle 1000 and is used for a circuit system of the vehicle 1000, for example, for operation power needed for starting, navigating, and driving of the vehicle 1000. In another embodiment of the present application, the battery 100 may not only serve as an operation power source for the vehicle 1000, but also serve as a driving power source for the vehicle 1000 to, instead of or in part instead of fuel or natural gas, provide driving power for the vehicle 1000.

In some embodiments, referring to FIG. 2, to meet different power requirements, a battery 100 may include a plurality of battery cells 12. The plurality of battery cells 12 may be connected in series, in parallel, or in series-parallel. The series-parallel connection refers to a mixture of series connection and parallel connection. The battery 100 may also be referred to as a battery 100 pack. The battery 100 may further include a case 111, and the interior of the case 111 is a hollow structure. The plurality of battery cells 12 are accommodated in the case 111. The case 111 may include two parts, herein referred to as a first part 1111 and a second part 1112, respectively, and the first part 1111 and the second part 1112 are snap-fitted together. The shapes of the first part 1111 and the second part 1112 may be determined based on the shape of the combination of the plurality of battery cells 12, and the first part 1111 and the second part 1112 may each be provided with one open face. For example, the first part 1111 and the second part 1112 may each be a hollow rectangular parallelepiped and each have only one open face. The open face of the first part 1111 and the open face of the second part 1112 may be disposed opposite to each other, and the first part 1111 and the second part 1112 are snap-fitted together to form the case 111 with an enclosed chamber. The plurality of battery cells 12, after being connected in parallel, in series, or in series-parallel, are disposed inside the case 111 formed after the first part 1111 and the second part 1112 are snap-fitted together.

The cavity of the case 111 for accommodating the battery cells 12 may also be referred to as an electrical cavity. The electrical cavity is used to accommodate a plurality of battery cells 12 and a busbar component. The electrical cavity may be sealed or unsealed. The electrical cavity provides a mounting space for the battery cells 12 and the busbar component. In some embodiments, the electrical cavity may be further provided with a structure for fixing the battery cells 12. The shape of the electrical cavity may be determined according to the plurality of battery cells 12 and the busbar component accommodated therein. In some embodiments, the electrical cavity may be a cube/rectangular parallelepiped with six walls. Because the battery cells 12 in the electrical cavity form a relatively high voltage output through electrical connection, the electrical cavity may also be referred to as a high-voltage cavity. The busbar component is used to achieve electrical connection among the plurality of battery cells 12, such as in parallel, in series, or in series-parallel connection. The busbar component may achieve electrical connection among the battery cells 12 by connecting to electrode terminals of the battery cells 12. In some embodiments, the busbar component may be fixed to the electrode terminals of the battery cells 12 by welding. The electrical connection formed corresponding to the busbar component in the high-voltage cavity may also be referred to as a high-voltage connection.

In some embodiments, the battery 100 further includes a bottom protective plate 112. The bottom protective plate 112 is generally disposed at the bottom of the case 111 for protecting the bottom of the case 111. The bottom protective plate 112 may also be a flat plate or a hood body having an accommodating cavity, and the accommodating cavity may accommodate heat preservation cotton and the like.

In some embodiments, referring to FIG. 3, a battery 100 may further include a thermal management component 113. The thermal management component 113 is provided therein with a heat exchange medium that flows circularly. The heat exchange medium is used to adjust the temperature of the battery cells 12. In order to reduce the interference of foreign matters with the normal operation of the battery 100, a case 111 generally needs to have good sealing performance. In some embodiments, the case 111 of the battery 100 may further include a bottom protective plate 112. In general, the bottom protective plate 112 is disposed in an enclosing manner at an outer edge of a bottom plate 1113 of the case 111 of the battery 100, which may reduce the risk of scratches and damage to the bottom plate 1113 of the case 111, thereby reducing the risk of seal failure of the case 111. Optionally, the battery 100 may further include other structures, which are not described in detail herein.

According to some embodiments of the present application, referring to FIG. 1 and FIG. 2, the present application provides a case assembly 11. The case assembly 11 is used to accommodate battery cells 12. The case assembly 11 includes a case 111, a bottom protective plate 112, and a thermal management component 113. The case 111 includes a bottom plate 1113 for supporting the battery cells 12. The bottom protective plate 112 is connected to the bottom plate 1113. At least a part of the thermal management component 113 is disposed between the bottom plate 1113 and the bottom protective plate 112, and the thermal management component 113 is used to adjust the temperature of the battery cells 12 through the bottom plate 1113.

The case 111 generally includes a frame, the bottom plate 1113, and a top cover. The frame is disposed in an enclosing manner at the edge of the bottom plate 1113 to define an accommodating cavity for accommodating the battery cells 12. The battery cells 12 are accommodated in the accommodating cavity and supported by the bottom plate 1113. In general, the battery cells 12 are at least partially in contact with a surface of the bottom plate 1113 located in the accommodating cavity. In some embodiments, the battery cells 12 are bonded to the bottom plate 1113 of the case 111 through a thermally conductive adhesive.

A thermal management component 113 may or may not be in contact with a bottom plate 1113. In the embodiments where the thermal management component 113 is not in contact with the bottom plate 1113, the heat exchange medium in the thermal management component 113 may first exchange heat with a medium (such as air) between the bottom plate 1113 and the bottom protective plate 112, and then the medium between the bottom plate 1113 and the bottom protective plate 112 may adjust the problem of the battery cells 12 through the bottom plate 1113. In yet other embodiments, a vacuum environment is present between the bottom plate 1113 and the bottom protective plate 112, and the thermal management component 113 and the battery cells 12 may also exchange heat by means of thermal radiation.

In some embodiments, a thermal management component 113 includes a water-cooled tube and a liquid inlet tube connector and a liquid outlet tube connector in communication with the water-cooled tube. The water-cooled tube is positioned between the bottom plate 1113 and the bottom protective plate 112, and the liquid inlet tube connector and the liquid outlet tube connector are positioned outside the bottom protective plate 112.

The thermal management component 113 is generally provided with a flow channel which is provided therein with a heat exchange medium that can flow. The heat exchange medium can exchange heat with the bottom plate 1113 and thereby exchange heat with the battery cells 12 which are in contact with the bottom plate 1113.

The bottom protective plate 112 may be connected to the bottom plate 1113 of the case 111 through bolts, or the two may be connected through the flow drill screw process.

In some embodiments, a sealed chamber may be formed between the bottom protective plate 112 and the bottom plate 1113 by disposing a sealing member between the bottom protective plate 112 and the bottom plate 1113.

The material of the bottom plate 1113 of the case 111 may include, but is not limited to, metal, thermal conductive plastic, or the like.

The thermal management component 113 may have a flow channel for fluid made of a thermal conductive material. The fluid flows in the flow channel and conducts heat through the thermal conductive material to adjust the temperature of the battery cells 12 through the bottom plate 1113.

Because the thermal management component 113 is located inside the case 111, the thermal management component 113 can be taken out only after the case 111 is opened and components such as the battery cells 12 are removed, which makes the maintenance and replacement of the thermal management component 113 very difficult. The bottom protective plate 112 is connected to the bottom plate 1113, and at least a part of the thermal management component 113 is disposed between the bottom plate 1113 and the bottom protective plate 112, which means that the bottom protective plate 112 can, to some extent, protect part of the thermal management component 113 to reduce the risk of damage to the thermal management component 113 by an external force. At the same time, disconnecting the bottom protective plate 112 and the case 111 enables the thermal management component 113 to be exposed, thereby facilitating maintenance and replacement of the thermal management component 113.

In the technical solutions of the embodiments of the present application, the case assembly 11 includes the case 111, the bottom protective plate 112, and the thermal management component 113. The case 111 includes the bottom plate 1113 for supporting the battery cells 12. The bottom protective plate 112 is connected to the bottom plate 1113. At least a part of the thermal management component 113 is disposed between the bottom plate 1113 and the bottom protective plate 112, and the thermal management component 113 is used to adjust the temperature of the battery cells 12 through the bottom plate 1113. This design positions the thermal management component 113 outside the case 111, which, in the case of liquid leakage or corrosion-induced perforation of the thermal management component 113, reduces the risk of thermal runaway of battery cells 12 caused by insulation failure of the battery cells 12 that is resulting from the contact of leaked liquid with the battery cells 12 due to the placement of the thermal management component 113 inside the case 111, thereby improving the reliability of the battery 100 during use.

According to some embodiments of the present application, referring to FIGs. 3-5, the case assembly 11 further includes a buffer layer 114, and at least a part of the buffer layer 114 is disposed between the bottom protective plate 112 and the thermal management component 113.

The material of the buffer layer 114 may include, but is not limited to, at least one of foamed plastic, aerogel, foam, and silica gel. The buffer layer 114 is provided to reduce the risk of the thermal management component 113 being squeezed and deformed when the thermal management component 113 is subjected to an external force.

The buffer layer may wrap an outer surface of the thermal management component 113, and part of the thermal management component 113 may also not be covered by the buffer layer.

In the embodiments where the thermal management component 113 is in contact with the bottom plate 1113, the surface of the buffer layer 114 on a side close to the bottom plate 1113 may be higher than the surface of the bottom protective plate 112 on a side close to the bottom plate 1113, or may be flush with the surface of the bottom protective plate 112 on a side close to the bottom protective plate 112.

The buffer layer may be processed and molded before being assembled between the thermal management component 113 and the bottom protective plate 112. The buffer layer may also be directly molded on the bottom protective plate 112.

When the case assembly 11 is subjected to an external force, the buffer layer 114 can buffer the thermal management component 113 to a certain extent, thus reducing the risk of damage to the thermal management component 113.

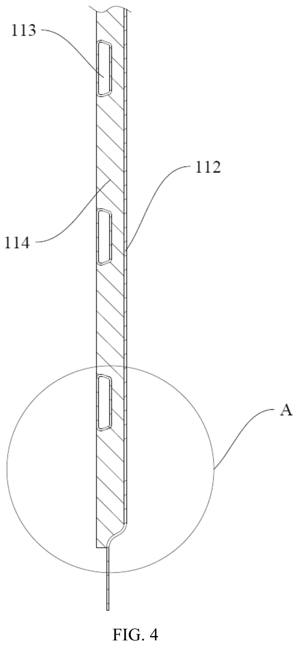

According to some embodiments of the present application, referring to FIGs. 4-5, the thermal management component 113 is connected to the bottom protective plate 112 through a buffer layer 114.

That the thermal management component 113 is connected to the bottom protective plate 112 through the buffer layer 114 may be referred to as the integration of the thermal management component 113 with the bottom protective plate 112. The thermal management component 113, the buffer layer 114, and the bottom protective plate 112 may be referred to as an integrated bottom protective plate 112. The thermal management component 113 being connected to the bottom protective plate 112 through the buffer layer 114 means that after a plate at bottom is separated from the bottom plate 1113, the thermal management component 113 may be separated from the case 111 of the battery 100 along with the bottom plate 1113. A plurality of integrated bottom protective plates 112 with the same specification may be processed in the production process of the battery 100. During use of the battery 100, if the thermal management component 113 fails, the integrated bottom protective plate 112 may be replaced with a new one and thereby the replacement of thermal management component 113 is completed simultaneously, thus eliminating the failure of the thermal management component 113 during use of the battery 100.

In some embodiments, the thermal management component 113 may be bonded to or embedded in the buffer layer. In some other embodiments, the thermal management component 113 may be first placed on a plate at bottom, then a buffer material is poured onto the bottom protective plate 112, and finally, after the buffer material is solidified, the thermal management component 113 is connected to the bottom protective plate 112 through the buffer layer 114. In this embodiment, the melting point of the thermal management component 113 is higher than the melting point of the buffer material.

The thermal management component 113 is integrated into the bottom protective plate 112 through the buffer layer 114, and the mounting of the thermal management component 113 can be completed after the bottom protective plate 112 is connected to the case 111. Therefore, the thermal management component 113 can be more conveniently and quickly assembled and disassembled.

According to some embodiments of the present application, referring to FIG. 3 and FIG. 4, the thermal management component 113 is embedded in the buffer layer 114.

When the buffer layer is disposed, a groove matching the contour of the thermal management component 113 may be reserved on the surface of the buffer layer 114. After the buffer layer 114 is processed, the buffer layer 114 may be embedded into the buffer layer 114 through the groove.

A mounting position for embedding the thermal management component 113 is formed in advance in the buffer layer 114, and the assembly of the thermal management component 113 can be completed simply by embedding the thermal management component 113 in the mounting position, so that the thermal management component 113 can be more conveniently positioned and fixed during assembly.

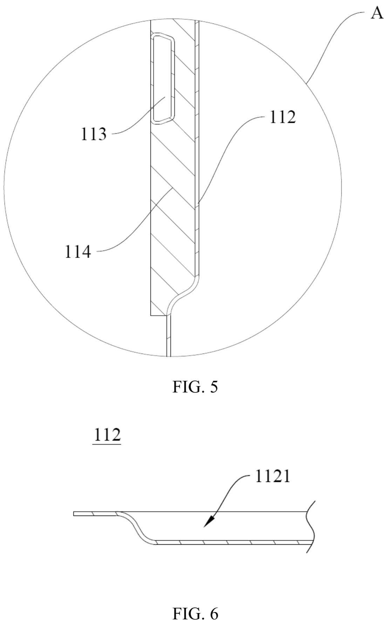

According to some embodiments of the present application, referring to FIG. 4 and FIG. 5, a side of the thermal management component 113 facing away from the bottom protective plate 112 is not covered by buffer layer 114 and is thermally connected to the bottom plate 1113 of the case 111.

The side of the thermal management component 113 facing away from the bottom protective plate 112 may be in direct contact with the bottom plate 1113, or may be thermally connected to the bottom plate 1113 through a thermally conductive adhesive.

The side of the thermal management component 113 facing away from the bottom protective plate 112 is not covered by the buffer layer 114 and is thermally connected to the bottom plate 1113 of the case 111. This improves the heat exchange effect between the thermal management component 113 and the bottom plate 1113 of the case 111.

According to some embodiments of the present application, referring to FIGs. 4-6, a side of the bottom protective plate 112 facing the case 111 is provided with a recess 1121, and at least a part of the buffer layer 114 is accommodated in the recess 1121.

The recess 1121 of the bottom protective plate 112 may be molded by punching, machining, injection molding, and the like.

The contour of the recess 1121 formed on the side of the bottom protective plate 112 facing the case 111 may be used as the reference when the buffer layer 114 is assembled with the bottom protective plate 112.

The recess 1121 can limit the boundary of the formed buffer layer 114 when the buffer layer 114 is formed on the bottom protective plate 112, which is beneficial to the automatic production of the case assembly 11.

According to some embodiments of the present application, the buffer layer 114 is injection molded on the bottom protective plate 112.

The bottom protective plate 112 may be used as the lower mold during the injection molding of the buffer layer 114, and the upper mold of the injection molding of the buffer layer 114 is snap-fitted to the bottom protective plate 112 to form a complete mold. The material for forming the buffer layer 114 is injected into the mold cavity in the mold, and after the material for the buffer layer 114 is solidified, the upper mold is removed, thus completing the injection molding of the buffer layer 114 on the bottom protective plate 112.

The bottom protective plate 112 is used as a part of the mold for injection molding the buffer layer 114, which reduces the production cost of the case assembly 11 to a certain extent.

According to some embodiments of the present application, the buffer layer 114 is made of at least one of foamed plastic, aerogel, foam, and silica gel.

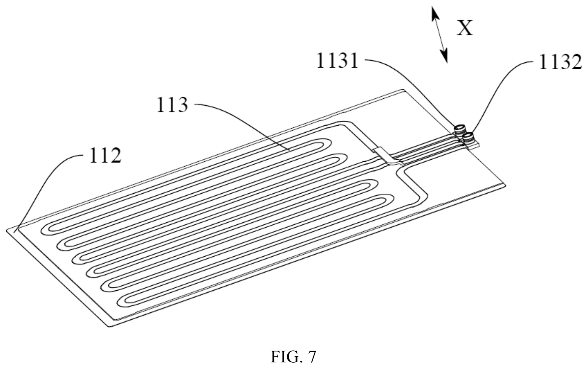

According to some embodiments of the present application, referring to FIG. 2 and FIG. 7, in the thickness direction of the bottom protective plate 112, the projection of a liquid inlet end 1131 and a liquid outlet end 1132 of the thermal management component do not overlap with the projection of the bottom protective plate 112.

The direction X in FIG. 7 is the thickness direction of the bottom protective plate 112.

The liquid inlet end 1131 and the liquid outlet end of the thermal management component generally communicate, through a pipe, with a driving source (such as a pump) that drives the heat exchange medium to flow. In the thickness direction of the bottom protective plate 112, the projection of the liquid inlet end 1131 of the thermal management component and the projection of the liquid outlet end 1132 of the thermal management component do not overlap with the projection of the bottom protective plate 112. This configuration allows for direct pipe connection outside the battery 100 after the mounting of the bottom protective plate 112, and features a relatively large assembly space and convenient pipe connection.

Such a design allows the liquid inlet end 1131 of the thermal management component and the liquid outlet end 1132 of the thermal management component to be more conveniently connected to the pipe.

According to some embodiments of the present application, referring to FIG. 4 and FIG. 5, the thermal management component 113 is a water-cooled tube or a water-cooled plate.

In the embodiments where the thermal management component 113 is a water-cooled tube, the cross section of the water-cooled tube may be a circle, a polygon, a trapezoid, or the like.

A water-cooled plate may also mean that the thermal management component 113 is in a plate shape.

In the embodiments where the thermal management component 113 is a water-cooled plate, the water-cooled plate may include a first plate body and a second plate body. The first plate body and the second plate body are stacked, and a groove is provided on a side of the second plate body facing the first plate body. The first plate body covers the groove to form a flow channel for the flowing of a heat exchange medium, and the flowing heat exchange medium can adjust the temperature of the battery cells 12.

In some embodiments, the water-cooled tube may have and only have one liquid inlet and one liquid outlet, and the water-cooled tube is in a shape of a serpentine coil. After entering the water-cooled tube from the liquid inlet, the heat exchange medium flows through the entire circuit loop and then flows out from the liquid outlet. In some other embodiments, the liquid inlet and the liquid outlet of the water-cooled tube are located on the same side of the thermal management component 113.

According to some embodiments of the present application, referring to FIG. 5 and FIG. 7, the thermal management component 113 is the water-cooled tube, and the water-cooled tube is a flat tube.

When the maximum width of the flow channel for the flowing of the heat exchange medium is fixed, a water-cooled tube in the form of a flat tube has a larger contact area with the bottom plate 1113 of the case 111 than a water-cooled tube in the form of a round tube.

The contact area between the flat tube and the bottom plate 1113 of the case 111 is larger, such that the heat exchange effect of the thermal management component 113 is improved.

According to some embodiments of the present application, the bottom protective plate 112 and the bottom plate 1113 are connected through bolts.

The bolt connection between the bottom protective plate 112 and the bottom plate 1113 means that the connection relationship between the bottom plate 1113 and the bottom protective plate 112 can be released by releasing the bolted fastening between the bottom protective plate 112 and the bottom plate 1113.

The bottom protective plate 112 can be removed by releasing the bolted fastening between the bottom protective plate 112 and the bottom plate 1113, so that the bottom protective plate 112 is more convenient to assemble and disassemble, thus facilitating maintenance of the thermal management component 113.

According to some embodiments of the present application, the present application further provides a battery 100, which includes a battery cell 12 and the case assembly 11 according to any one of the above solutions. The case assembly 11 is used to accommodate the battery cell 12.

According to some embodiments of the present application, the present application further provides an electric device, which includes the battery 100 according to any one of the above solutions. The battery 100 is used to provide electric energy.

According to some embodiments of the present application, referring to FIGs. 2-7, the present application provides a case assembly 11. The case assembly 11 is used to accommodate battery cells 12, and the case assembly 11 includes a case 111, a bottom protective plate 112, and a thermal management component 113. The case 111 includes a frame, a top cover, and a bottom plate 1113. The frame is disposed in an enclosing manner at the edge of the bottom plate 1113 to define an accommodating cavity for accommodating the battery cells 12. The battery cells 12 are accommodated in the accommodating cavity and supported by the bottom plate 1113. The battery cells 12 are bonded to the bottom plate 1113 through a thermally conductive adhesive. The bottom protective plate 112 is connected to the bottom plate 1113 through bolts.

The case assembly 11 further includes a buffer layer 114, and at least a part of the buffer layer 114 is disposed between the bottom protective plate 112 and the thermal management component 113. A side of the bottom protective plate 112 facing the case 111 is provided with a recess 1121, and at least a part of the buffer layer 114 is accommodated in the recess 1121. At least a part of the thermal management component 113 is disposed between the bottom plate 1113 and the bottom protective plate 112, and the thermal management component 113 is used to adjust the temperature of the battery cells 12 through the bottom plate 1113. In the thickness direction of the bottom protective plate 112, the projection of a liquid inlet end 1131 of the thermal management component and the projection of a liquid outlet end 1132 of the thermal management component do not overlap with the projection of the bottom protective plate 112. The thermal management component 113 is a water-cooled tube, and the water-cooled tube is a flat tube.

The thermal management component 113 is connected to the bottom protective plate 112 through the buffer layer 114. The side of the thermal management component 113 facing away from the bottom protective plate 112 is not covered by the buffer layer 114 and is thermally connected to the bottom plate 1113 of the case 111. The buffer layer 114 is injection molded on the bottom protective plate 112. The buffer layer 114 is made of foamed plastic.

Finally, it should be noted that the above embodiments are only used to illustrate the technical solutions of the present application, rather than limit same. Although the present application has been described in detail with reference to the foregoing embodiments, those of ordinary skill in the art will appreciate that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A case assembly, for accommodating a battery cell, comprising:
a case, comprising a bottom plate for supporting the battery cell;
a bottom protective plate, connected to the bottom plate; and
a thermal management component, wherein at least a part of the thermal management component is disposed between the bottom plate and the bottom protective plate, and the thermal management component is used to adjust a temperature of the battery cell through the bottom plate.

2. The case assembly according to claim 1, wherein the case assembly further comprises a buffer layer, and at least a part of the buffer layer is disposed between the bottom protective plate and the thermal management component.

3. The case assembly according to claim 2, wherein the thermal management component is connected to the bottom protective plate through the buffer layer.

4. The case assembly according to claim 2 or 3, wherein the thermal management component is embedded in the buffer layer.

5. The case assembly according to any one of claims 2-4, wherein a side of the thermal management component facing away from the bottom protective plate is not covered by the buffer layer and is thermally connected to the bottom plate of the case.

6. The case assembly according to any one of claims 2-5, wherein a side of the bottom protective plate facing the case is provided with a recess, and at least a part of the buffer layer is accommodated in the recess.

7. The case assembly according to any one of claims 2-6, wherein the buffer layer is injection molded on the bottom protective plate.

8. The case assembly according to any one of claims 2-7, wherein the buffer layer is made of at least one of foamed plastic, aerogel, foam, and silica gel.

9. The case assembly according to any one of claims 1-8, wherein in a thickness direction of the bottom protective plate, a projection of a liquid inlet end and a projection of a liquid outlet end of the thermal management component do not overlap with a projection of the bottom protective plate.

10. The case assembly according to any one of claims 1-9, wherein the thermal management component is a water-cooled tube or a water-cooled plate.

11. The case assembly according to claim 10, wherein the thermal management component is a water-cooled tube, and the water-cooled tube is a flat tube.

12. The case assembly according to any one of claims 1-11, wherein the bottom protective plate and the bottom plate are connected through bolts.

13. A battery, comprising:
a battery cell; and
the case assembly according to any one of claims 1-12, wherein the case is used to accommodate the battery cell.

14. An electric device, wherein the electric device comprises the battery according to claim 13, and the battery is used to provide electric energy.
